# EUROPÄISCHE PATENTANMELDUNG

(11) **EP 4 467 592 A1**
(43) Veröffentlichungstag der Anmeldung: **27.11.2024**
(21) Anmeldenummer: 24171534.1
(22) Anmeldetag: 22.04.2024
(51) Int. Cl.: C08J 5/04

(54) **VERFAHREN ZUM HERSTELLEN EINES FORMTEILS MITTELS EINER THERMOPLASTISCHEN VERARBEITUNGSMASCHINE**

(30) Priorität: 19.05.2023 CH 5402023; 24.05.2023 DE 102023113612
(71) Anmelder: Model Holding AG, 8570 Weinfelden (CH)
(72) Erfinder: Kasper, Severin, 8400 Winterthur (CH); Metin, Yücel, 37154 Northeim (DE)
(74) Vertreter: Lichti - Patentanwälte Partnerschaft mbB

(57) **Zusammenfassung**

Die Erfindung betrifft ein Verfahren zum Herstellen eines Formteils, bei dem ein Ausgangsmaterial (1) bereitgestellt und mittels einer thermoplastischen Verarbeitungsmaschine zu dem Formteil verarbeitet wird, insbesondere durch Spritzgießen, Heißpressen oder Extrudieren. Erfindungsgemäß umfasst das Ausgangsmaterial (1) ein erstes und ein zweites Grundmaterial, wobei als erstes Grundmaterial (2) ein Fasermaterial und als zweites Grundmaterial (3) ein strukturgebendes Fließhilfsmittel verwendet wird. Dabei bildet der Feststoffanteil (2a) des Fasermaterials mindestens 51 % und der Feststoffanteil (3a) des strukturgebenden Fließhilfsmittels mindestens 15 % des Ausgangsmaterials (1). Der Feuchteanteil (4) des Ausgangsmaterials (1) beträgt zwischen 5 % und 20 % und es umfasst weniger als 12 % während des Verfahrens zugesetzte Feuchte (5). Das Ausgangsmaterial (1) wird homogenisiert und seine Verarbeitung erfolgt in der Verarbeitungsmaschine bei einer Temperatur zwischen 90 °C und 240 °C.

## Beschreibung

Die Erfindung bezieht sich auf ein Verfahren zum Herstellen eines Formteils, insbesondere aus einem Recycling-, Cellulose-, Biofaser- oder Biopulver-Material, bei dem ein Ausgangsmaterial bereitgestellt und mittels einer thermoplastischen Verarbeitungsmaschine zu dem Formteil verarbeitet wird. Ferner bezieht sich die Erfindung auf ein mit dem Verfahren hergestelltes Formteil. Ein Biofaser- oder Biopulver-Material ist ein Material biologischen Ursprungs, unabhängig davon, ob es natürlich oder durch einen regenerierten Prozess hergestellt wird.

Die konventionelle Herstellung von Formteilen aus Kunststoff durch thermoplastische Verarbeitung, beispielsweise durch Spritzgießen, Heißpressen oder Extrudieren, bietet viele Vorteile hinsichtlich Gestaltungsfreiheit, Ausbringung und Effizienz. Kunststoffprodukte werden jedoch aus Gesundheits- und Umweltgründen, insbesondere durch die laufende Diskussion um Mikroplastik, Vermüllung der Weltmeere und dergleichen zunehmend kritisch hinterfragt.

Für technische Anwendungen und andere Gebrauchsgüter mit langer Nutzungszeit bieten die Kunststoffe eine gute Beständigkeit gegen Umwelteinflüsse und die Möglichkeit des Recycelns. Beispielhaft sei hier die PET-Flasche genannt, für die zumindest in weiten Teilen Europas ein funktionierendes Recycling bzw. Upcycling stattfindet. Bei Formteilen für eine einmalige Verwendung oder mit kurzer Einsatzdauer und außerhalb eines funktionierenden Recyclingkreislaufes sind Kunststoffe mit ihren Eigenschaften jedoch häufig überqualifiziert. Für diese Anwendungen ist ein preisgünstiges Material wünschenswert, das biologisch abbaubar oder sogar kompostierbar ist, sich jedoch mit herkömmlichen thermoplastischen Verarbeitungmaschinen verarbeiten lässt.

Im Stand der Technik ist es bekannt, hierfür eine Kombination aus biologisch abbaubaren Kunststoffen und Cellulosefasern einzusetzen und diese durch Spritzgießen zu verarbeiten. Aufgrund des Anteils nachwachsender Cellulosefasern im Granulat wird in diesem Zuge auch von Papierspritzguss gesprochen. Die Kombination der Cellulosefasern mit biologisch abbaubaren Kunststoffen bietet den Vorteil der thermoplastischen Verarbeitung und das Abbauverhalten bzw. die Kompostierbarkeit lassen sich einstellen. Hierbei können die Anwendung und die Anwendungsdauer des Einzelfalls berücksichtigt werden. Allerdings ist im Ausgangsmaterial nach wie vor Kunststoffenthalten, so dass die genannten Nachteile in diesem Zusammenhang nicht vermieden werden.

Ausgehend von diesem Stand der Technik liegt der vorliegenden Erfindung die Aufgabe zugrunde, ein verbessertes Verfahren zum Herstellen eines Formteils zu schaffen, bei dem ein Ausgangsmaterial bereitgestellt und mittels einer thermoplastischen Verarbeitungsmaschine zu dem Formteil verarbeitet wird. Entsprechendes gilt für das mit dem Verfahren hergestellte Formteil. Dabei soll das Formteil insbesondere recycelbar (rezyklierbar) sein und nachhaltig, ressourcenschonend und umweltfreundlich auf Basis recycelbarer und/ oder nachwachsender Rohstoffe herzustellen sein.

Diese Aufgabe wird erfindungsgemäß durch ein Verfahren mit den Merkmalen des Patentanspruchs 1 und durch ein Formteil mit den Merkmalen des Patentanspruchs 13 gelöst. Ausgestaltungen, Weiterbildungen und Verwendungen der Erfindung ergeben sich aus den abhängigen Ansprüchen und der nachfolgenden Beschreibung.

Das erfindungsgemäße Verfahren zum Herstellen eines Formteils, insbesondere aus einem Recycling-, Cellulose-, Biofaser- oder Biopulver-Material, bei dem ein Ausgangsmaterial bereitgestellt und mittels einer thermoplastischen Verarbeitungsmaschine zu dem Formteil verarbeitet wird, weist die Besonderheit auf, dass das Ausgangsmaterial ein erstes und ein zweites Grundmaterial umfasst, wobei als erstes Grundmaterial ein Fasermaterial und als zweites Grundmaterial ein strukturgebendes Fließhilfsmittel verwendet wird, der Feststoffanteil des Fasermaterials mindestens 51 % des Ausgangsmaterials bildet, der Feststoffanteil des strukturgebenden Fließhilfsmittels mindestens 15 % des Ausgangsmaterials bildet, der Feuchteanteil des Ausgangsmaterials zwischen 5 % und 20 % beträgt, das Ausgangsmaterial weniger als 12 % während des Verfahrens zugesetzte Feuchte umfasst, das Ausgangsmaterial homogenisiert wird und die Verarbeitung des homogenisierten Ausgangsmaterials in der Verarbeitungsmaschine bei einer Temperatur zwischen 90 °C und 240 °C erfolgt. Das erfindungsgemäße Formteil ist mittels eines erfindungsgemäßen Verfahrens hergestellt.

Unter Feuchte ist dabei jede bei der Herstellung von Formteilen gebräuchliche Form einer in den Bestandteilen enthaltenen und/oder dem Ausgangsmaterial zugesetzten Flüssigkeit zu verstehen, insbesondere Wasser und/oder Alkohol. Der Feuchtegehalt des Ausgangsmaterials ist durch die eingesetzten Materialien vorgegeben bzw. bedingt, jedoch nicht durch das Verarbeitungsfahren zu einem Formteil in der thermoplastischen Verarbeitungsmaschine. Erfindungsgemäß liegt der Feuchteanteil (die Feuchte, die Feuchtigkeit) des Ausgangsmaterials zwischen 5 % und 20 % und kann in vorteilhaften Ausführungsformen beispielsweise auch zwischen 8 % und 15 % betragen. In einer Weiterbildung der Erfindung kann der Feuchteanteil des Ausgangsmaterials zur Verbesserung der Lagerungsfähigkeit zwischen 5 % und 12 %, insbesondere zwischen 5 % und 8 % betragen. Vorzugsweise ist der Feuchteanteil des Ausgangsmaterials alleine durch Wasser und/oder Alkohol bestimmt.

Das Ausgangsmaterial kann also während des erfindungsgemäßen Verfahrens Feuchte aus zwei verschiedenen Quellen enthalten, nämlich einerseits Feuchte, die in den eingesetzten Materialien (Stoffen, Bestandteilen, Komponenten), aus denen sich das Ausgangsmaterial zusammensetzt, insbesondere dem ersten und/oder zweiten Grundmaterial, inhärent als deren Bestandteil enthalten ist, und andererseits ein erfindungsgemäßes Höchstmaß an Feuchte, die dem Ausgangsmaterial während des Verfahrens zusätzlich zu seiner inhärenten Feuchte zugesetzt werden kann. Im Sinne der Erfindung ist eine Feuchte während des Verfahrens dem Ausgangsmaterial zugesetzt, wenn sie dem Ausgangsmaterial bei dessen Bereitstellung und/oder bei dessen Verarbeitung zu einem Formteil zugeführt wird, d. h., wenn die Feuchte einem Bestandteil des Ausgangsmaterials oder mehreren Bestandteilen des Ausgangsmaterials oder dem (aus seinen Bestandteilen angemischten) Ausgangsmaterial zugesetzt wird, und/oder wenn sie dem Ausgangsmaterial bei seiner Verarbeitung zu einem Formteil zugesetzt wird.

Die konkret verwendete Verarbeitungstemperatur kann von der gewünschten Viskosität und der konkret vorliegenden Stoffzusammensetzung abhängig sein. Das Homogenisieren erfolgt beispielsweise durch konventionelle Zerkleinerungs- und/ oder Durchmischungsmethoden und erhöht den Grad der Durchmischung der Stoffkomponenten.

Im Sinne der Erfindung beziehen sich Angaben in % grundsätzlich auf Gew.-%, sofern nichts Anderes beschrieben ist.

Erfindungsgemäß kann zum Herstellen vielfältiger Gegenstände als Formteile im Sinne der Erfindung das Ausgangsmaterial durch thermoplastische Verfahren, beispielsweise Spritzen, Heißpressen oder Extrudieren, verarbeitet werden. Wesentliche Besonderheiten der Erfindung sind dabei zum einen der vergleichsweise hohe Anteil an Fasermaterial und zum anderen der vergleichsweise geringe, während des Verfahrens zugesetzte Feuchte- bzw. Wasseranteil, der gemäß einer bevorzugten Ausführungsform sogar ganz entfallen kann. Beides trägt zu einer hohen Wirtschaftlichkeit des Verfahrens bei, wogegen im Stand der Technik bei der Verarbeitung aufwändige, energieverbrauchende Vorkehrungen getroffen werden müssen, um das Entstehen beträchtlicher Mengen von Wasserdampf zu verhindern oder entstehenden Wasserdampf zu beseitigen, damit der Druck in der thermoplastischen Verarbeitungsmaschine nicht über den zulässigen Wert steigt.

Die Erfindung hat weitere Vorteile. Hierzu zählt, dass eine konventionelle, gebräuchliche thermoplastische Verarbeitungsmaschine verwendet kann, ohne dass diese in besonderer Weise an das erfindungsgemäße Herstellungsverfahren angepasst werden muss. Aufgrund des geringen Gehaltes des Ausgangsmaterials an inhärenter und/oder während des Verfahrens zugesetzter Feuchte kann es mit vorhandenen, konventionellen, gebräuchlichen thermoplastischen Verarbeitungsmaschinen zu einem Formteil verarbeitet werden, wobei gegebenenfalls nur Prozessparameter wie Temperatur, Druck und Verarbeitungsgeschwindigkeit an das Ausgangsmaterial angepasst, aber keine maschinellen Umbauten durchgeführt werden müssen.

Als Ausgangsmaterial können sowohl Primärfasern als auch Recyclingmaterial verarbeitet werden. Eine Primärfaser ist ein aus (Bio)Fasern hergestelltes Material bei der ersten Anwendung (Frischfaser). Ein Recyclingmaterial ist ein aus (Bio)Fasern hergestelltes Material (Frischfaser), das den Papier-/Recyclingkreislauf mindestens einmal durchlaufen hat. Dem Ausgangsmaterial werden vorzugsweise keine synthetischen Polymere (Polylactide, PLA) und/oder keine Kunststoffe und/oder keine Biokunststoffe zugesetzt, was das erfindungsgemäße Verfahren auch aus gesundheitlicher Sicht verbessert. Ferner ist das nach der Erfindung hergestellte Formteil vorzugsweise rezyklierbar. Es kann dem Altpapierkreislauf zugeführt und auch verwertet werden. Im Recyclingprozess können alle Bestandteile getrennt und insbesondere das erste Grundmaterial wiederverwendet werden. Das Formteil lässt sich bei Bedarf auch kompostieren.

Bei einem erfindungsgemäßen Verfahren wird das Ausgangsmaterial bereitgestellt, das heißt angemischt, und vorzugsweise vor dem Einfüllen in die Verarbeitungsmaschine homogenisiert. Es kann aber auch stattdessen oder zusätzlich durch eine Schnecke vor oder in der Verarbeitungsmaschine weiter zu einer homogenen Masse durchgemischt und transportiert werden. Die für thermoplastische Verarbeitungsmaschinen typische Funktion des Druckaufbaus/Transports wird somit vorteilhafterweise auch für die Verarbeitung anderer Materialien als Kunststoffe ermöglicht und zum erfindungsgemäßen Herstellen eines Formteils genutzt.

Die Verarbeitbarkeit des Ausgangsmaterials in einer Schnecke, die das Ausgangsmaterial zu einer oder in einer thermoplastischen Verarbeitungsmaschine transportiert, wird durch die Einstellung der Eigenschaften des Ausgangsmaterials ermöglicht. Zu trockene Mischungen pressen sich in der Verarbeitungsmaschine in die Schneckengänge und verklumpen. Dieser Effekt verhindert im Stand der Technik die überwiegende Verwendung von Biomaterial als Ausgangsmaterial.

Im Rahmen der Erfindung kann es vorteilhaft sein, wenn die Temperatur der Formfixierung, d. h. die Geliertemperatur des zu formenden bzw. zu spritzenden Ausgangsmaterials, erst unmittelbar vor bzw. in der Form der Verarbeitungsmaschine erreicht wird. In der Schnecke kann das Ausgangsmaterial dabei bereits erhitzt werden, ohne jedoch den Gelierpunkt des Ausgangsmaterials zu erreichen. In dieser Phase kann die Wärme so eingestellt und genutzt werden, um gegebenenfalls bereits etwas Feuchte, Dampf oder Druck in Folge des Wasserdampfs abzuleiten und damit den Formgebungsprozess zu verbessern. Das gilt insbesondere sowohl beim Spritzgießen in eine Form als auch beim Heißpressen in Profile und beim Extrudieren.

Um sicherzustellen, dass die Temperatur zwischen 90 °C und 240 °C der Formfixierung des Ausgangsmaterials bei seiner Verarbeitung in der thermoplastischen Verarbeitungsmaschine erst unmittelbar vor bzw. in der Form der Verarbeitungsmaschine und nicht schon zuvor in einer Schnecke, die das Ausgangsmaterial zu einer thermoplastischen Verarbeitungsmaschine oder in einer thermoplastischen Verarbeitungsmaschine zu der Form transportiert, erfolgt, kann beispielsweise in zwei unterschiedlichen Varianten verfahren werden, die sich insbesondere in der Verarbeitung der Feuchte des Ausgangsmaterials unterscheiden.

Gemäß einer ersten vorteilhaften Variante kann das Ausgangsmaterial in eine mindestens 100 °C heiße Form gespritzt werden. Die Temperatur der Form ist im konkreten Fall insbesondere abhängig von der Zusammensetzung des ersten Grundmaterials, der Menge an Flüssigkeit, der angestrebten Oberflächengüte, der Materialmenge, der Materialstärke und/oder der Taktung der Verarbeitungsmaschine. Diese Temperatur in der Form sorgt für das Gelieren des ersten Grundmaterials, das Verfestigen des Formteils und das Verdampfen des Feuchteanteils. Dampf, Hitze und Druck formen und fixieren das Formteil. Die Verarbeitungsmaschine bzw. das Werkzeug können in dieser Variante mit entsprechenden Vorrichtungen ausgestattet werden, um den (Wasser)Dampf und damit den Druck abzuleiten. Das kann in Form von Ventilen, Pins, Membranen oder auch in Form von gesinterten Formen oder auf andere Weise erfolgen. Übermäßiger Druck könnte sonst zu Rückstößen führen, die Ausgangsmaterial mitreißen, was fehlende Einspritzflächen, unvollständige und fehlerhafte Konstrukte zur Folge hätte. Bei dieser ersten Variante ist eine Zuführtemperatur zumindest in einem Teilbereich der Schnecke vor der thermoplastischen Verarbeitung ab 30 °C vorteilhaft. Je nach Feuchtegehalt kann diese auch bis zu 100 °C betragen. Dabei sollte diese vorzugsweise mindestens 5 °C unter dem Gelierpunkt des ersten Grundmaterials liegen.

Im Gegensatz zu dieser ersten Variante der Erfindung werden bei der aus dem Stand der Technik bekannten thermoplastischen Verarbeitung von (Bio)Kunststoffen diese zunächst erhitzt/verflüssigt, durch die Schnecke nach vorne transportiert und gleich nach dem Einspritzen abgekühlt, damit sich das Formteil verfestigt.

Gemäß einer zweiten vorteilhaften Variante kann das Ausgangsmaterial, insbesondere wenn ihm während des Verfahrens weniger als 8 %, vorzugsweise weniger als 4 % oder besonders bevorzugt keine Feuchte zugesetzt wird, gut homogenisiert und/oder optional granuliert werden, bevor es der Verarbeitungsmaschine zugeführt wird. In der Verarbeitungsmaschine wird es durch die Schnecke weiter transportiert und dabei geknetet und erhitzt. Durch die Wärme wird der Stärkeanteil des Ausgangsmaterials des Granulats in der Schnecke verflüssigt. Die exakte Temperaturregelung in der Schnecke und dem Austritt erfolgt dabei vorzugsweise derart, dass der Gelierpunkt der Stärke erst in der Spritzform, in der Düse oder unmittelbar vor der Formgebung erreicht wird. Bei dieser zweiten Variante besteht kein Erfordernis einer Druckableitung, da hier in der Verarbeitungsmaschine nur wenig oder kein (Wasser)Dampf freigesetzt wird. Gleichwohl ist die Zuführtemperatur des zu verarbeitenden Ausgangsmaterials vorzugsweise ausreichend hoch, um es zu verflüssigen und in der Schnecke zu transportieren, ohne dabei den Gelierpunkt zu erreichen. Dies erfolgt erst innerhalb der Form bzw. unmittelbar davor.

Gemäß einem vorteilhaften Merkmal kann vorgesehen sein, dass das erste Grundmaterial ein Fasermaterial aus Biofasern und/oder mindestens ein Mitglied der folgenden Gruppe umfasst: Pappe, Papier, Papierfasern, Recyclingpapier, Cellulose, Kleie, Stroh, Hanf, Baumwolle. Das Merkmal "umfasst" kann in diesem Zusammenhang bedeuten, dass das erste Grundmaterial eines der genannten Materialien ist, d. h. vollständig aus diesem besteht, oder eines der genannten Materialien (in der Regel zu einem wesentlichen Anteil) enthält. Bei einem erfindungsgemäßen Verfahren ist es insbesondere nicht erforderlich, das Fasermaterial fein zu vermahlen, sondern es kann die ganze Naturfaser des Fasermaterials eingesetzt werden.

Die Papierfasern können aus Holz bzw. aus Hackschnitzeln gewonnen werden, die zu Zellstoff weiterverarbeitet werden. Aus dem Zellstoff werden anschließend die benötigten Fasern in entsprechender Form chemisch herausgelöst und dem ersten Grundmaterial beigemengt. Das erste Grundmaterial umfasst bevorzugt einen oder mehrere nachwachsende Rohstoffe und besteht vorzugsweise vollständig oder nahezu vollständig aus diesen. Die Rohstoffe des ersten Grundmaterials können sortenrein oder nach Eigenschaften gemischt sein. Es können sowohl Frischfasern als auch Recyclingmaterial aus dem Altpapierkreislauf eingesetzt werden. Aus Gründen der Kosten oder der Ökologie können recyclingfähige Materialien und zugehörige Nebenprodukte bevorzugt sein.

Ein weiteres vorteilhaftes Merkmal kann sein, dass der Feststoffanteil des ersten Grundmaterials 51 % bis 85 %, vorzugsweise 51 % bis 80 % und besonders bevorzugt 51 % bis 70 % des Ausgangsmaterials bildet. Dabei beträgt in vorteilhaften Ausführungsformen der Feststoffanteil des ersten Grundmaterials mindestens 52 %, bevorzugt mindestens 54 % und besonders bevorzugt mindestens 55 %. Ein möglichst hoher Feststoffanteil des Ausgangsmaterials ist insbesondere für die wirtschaftliche Rezyklierbarkeit des Formteils und eine hohe Ausbeute an Fasern beim Recyceln des Formteils vorteilhaft.

Eine vorteilhafte Ausführungsform kann darin bestehen, dass das zweite Grundmaterial mindestens ein Mitglied aus der folgenden Gruppe aufweist oder aus diesem besteht: Native Stärke, modifizierte Stärke, Industriestärke, Mehl, Müllereiprodukte, Kartoffelstärke, Weizenstärke, lang- oder kurzkettiger Zucker.

Nach einem weiteren vorteilhaften Merkmal wird vorgeschlagen, dass das zweite Grundmaterial aus mindestens einem Mitglied aus der folgenden Gruppe hergestellt ist: Weizen, Mais, Tapioka, Reis, Kartoffeln (Industrie- oder Speisekartoffeln), chemisch, mechanisch und/oder thermisch modifizierter Stärketyp.

Das zweite Grundmaterial dient zum Verbessern der Verarbeitbarkeit des Ausgangsmaterials und/oder zum Erzielen spezieller Eigenschaften des Formteils. Das zweite Grundmaterial kann insbesondere die Struktur bzw. Körnigkeit des Ausgangsmaterials und seine Fließfähigkeit beeinflussen. Das zweite Grundmaterial kann sortenrein oder nach Eigenschaften gemischt sein. Es können verschiedene Stärketypen und/oder kurz- und/oder langkettige Zucker zu einer Mischung zusammengefügt werden.

Die Menge des eingesetzten zweiten Grundmaterials hat eine direkte Auswirkung auf die Oberfläche und die Steifigkeit/ Elastizität des Formteiles (Produktes). In vorteilhaften Ausführungsformen kann vorgesehen sein, dass der Feststoffanteil des zweiten Grundmaterials 15 % bis 49 %, bevorzugt 20 % bis 49 % und besonders bevorzugt 25 % bis 49 % des Ausgangsmaterials bildet.

Gemäß vorteilhaften Ausführungsformen wird vorgeschlagen, dass das Ausgangsmaterial weniger als 8 %, vorzugsweise weniger als 4 %, während des Verfahrens zugesetzte Feuchte umfasst, d. h. dem Ausgangsmaterial weniger als 8 %, vorzugsweise weniger als 4 %, Feuchte (Flüssigkeit, beispielsweise Wasser und/oder Alkohol) zugesetzt wird. In einer Weiterbildung kann vorgesehen sein, dass dem Ausgangsmaterial derart Feuchte zugesetzt wird, dass die Feuchte des Ausgangsmaterials zwischen 5 % und 12 %, insbesondere zwischen 5 % und 8 %, gebracht und insbesondere in diesem Bereich während des weiteren Verfahrens zumindest vorübergehend, insbesondere während des gesamten Verfahrens, gehalten wird.

Gemäß einer besonders vorteilhaften Ausführungsform wird vorgeschlagen, dass dem Ausgangsmaterial höchstens 5 %, insbesondere gar keine Feuchte zugesetzt wird. Das erfindungsgemäße Verfahren kann ohne Zugabe von Feuchte durchgeführt werden, d. h. auf das für den Verarbeitungsprozess üblicherweise notwendige Zusetzen von Wasser, Flüssigkeit, Verflüssigungsmittel oder Fließmittel kann verzichtet werden, insbesondere wenn das Ausgangsmaterial homogenisiert wird, bevor es mit der thermoplastischen Verarbeitungsmaschine verarbeitet und geformt wird. In einer Weiterbildung der Erfindung kann vorgesehen sein, dass kein Alkohol und/oder kein Wasser zugesetzt wird.

In einer Weiterbildung der Erfindung kann vorgesehen sein, dass die Feuchte des Formteils durch den Feuchteanteil des Ausgangsmaterials bereitgestellt wird. Insofern kann die gewünschte Feuchte des Formteils, die auch im Kontext der Erfindung als eine Art "Zielfeuchte" gesehen werden kann, durch den Feuchteanteil des Ausgangsmaterials, insbesondere durch Wasser, eingestellt werden. Optional kann alternativ oder zusätzlich Alkohol eingesetzt werden, beispielsweise für besondere Anforderungen.

Ein anderes vorteilhaftes Merkmal kann sein, dass das Ausgangsmaterial zum Erzielen einer speziellen Eigenschaft des Formteils ein Additiv umfasst, das mindestens ein Mitglied der folgenden Gruppe aufweist: Farbstoff, Farbe, Aktivkohle, elektrisch leitende Partikel, verkapselte Mittel, Rostschutzmittel, Öl. Nach einem zusätzlichen Merkmal wird vorgeschlagen, dass das Additiv 0 % bis 5 %, vorzugsweise 0,1 % bis 4 %, des Ausgangsmaterials bildet. Die Obergrenze von 5 % für das Additiv orientiert sich dabei an aus sogenannten Papiereinstofflösungen bestehenden Verpackungen, die maximal 5 % Fremdstoffe enthalten dürfen, um noch als recycelbar zu gelten.

Farbstoff oder Farbe kann zum Einfärben des Formteils dienen und mit Aktivkohle können Barriereeigenschaften des Formteils eingestellt werden. Elektrisch leitende Partikel erzielen eine Antistatik und verkapselte Mittel haben eine antimikrobielle Funktion. Mit Rostschutzmittel oder Öl erzielt man einen Korrosionsschutz.

Ein bevorzugtes Merkmal des erfindungsgemäßen Verfahrens kann darin bestehen, dass das Ausgangsmaterial frei von Kunststoff ist. In einer Weiterbildung der Erfindung kann vorgesehen sein, dass das Ausgangsmaterial keinen Haftvermittler aufweist und/oder dem Ausgangsmaterial kein Haftvermittler zugesetzt wird.

Gemäß einer ersten vorteilhaften Ausführungsform des erfindungsgemäßen Verfahrens wird vorgeschlagen, dass als Verarbeitungsmaschine eine Verarbeitungsmaschine für den Spritzguss verwendet und damit das Ausgangsmaterial durch Spritzgießen verarbeitet wird. Vorteilhafterweise kann dabei vorgesehen sein, dass das Spritzgießen bei einer Temperatur zwischen 90 °C und 200 °C, bevorzugt bei einer Temperatur zwischen 110 °C und 150 °C erfolgt.

Die Verarbeitungstemperatur wird dabei vorzugsweise in Abhängigkeit von der jeweiligen Zusammensetzung und Viskosität des Ausgangsmaterials so gewählt, dass das Ausgangsmaterial durch Spritzgießen verarbeitet werden kann und hierfür die richtige Konsistenz hat. Die Fließeigenschaft des Ausgangsmaterials wird insbesondere durch das Mischungsverhältnis des ersten und zweiten Grundmaterials eingestellt. Je nach Rezeptur, Anwendung, Materialmenge, Materialstärke und Maschinengeschwindigkeit können die Temperaturzonen der Verarbeitungsmaschine unterschiedlich gestaltet werden. Die Temperatur in der Schnecke, dem Austritt und im Werkzeug sowie und die Verweildauer in der Maschine können aufeinander abgestimmt werden. Eine zu hohe Temperatur, d. h. insbesondere über 200 °C, bewirkt ein Verbrennen des Ausgangsmaterials und eine zu niedrige Temperatur ergibt ein nicht oder nur schlecht verarbeitbares Ausgangsmaterial. Unterhalb von 90 °C ist in der Regel ein Spritzgießen nicht möglich.

Diese erste Ausführungsform der Erfindung kann als Papierspritzgussverfahren mit spezifischen Prozessparametern bezeichnet werden. Die Spritzgusstechnik wird seit vielen Jahren hauptsächlich für das Herstellen detaillierter Kunststoffbauteile genutzt. Beim dem erfindungsgemäßen Papierspritzgussverfahren verhält sich die maschinelle Anwendung ähnlich. Statt Kunststoffgranulat wird das Ausgangsmaterial des erfindungsgemäßen Verfahrens mit Hilfe eines Werkzeuges zu einem Formteil spritzgegossen beziehungsweise mittels Temperatureinwirkung "gebacken".

Im Einzelnen kann der maschinelle Verarbeitungsprozess des Ausgangsmaterials durch Spritzgießen beispielsweise einen oder mehrere der folgenden Schritte umfassen. In einem ersten Schritt wird das Ausgangsmaterial in die Formnester eines Werkzeuges gespritzt. In einem zweiten Schritt wird über eine geregelte Temperatureinwirkung das Ausgangsmaterial im Werkzeug zum finalen Formteil "gebacken". In einem dritten Schritt wird das aufgewärmte Formteil durch in die Kavität hineindringende Stifte ausgeworfen.

Das Formteil ist nach dem Spritzgießen vorzugsweise sofort gebrauchsfertig. Das Verfahren eignet sich u.a. zum Herstellen umweltfreundlicher und individuell konstruierter Formteile bzw. Verpackungslösungen. Vorteile sind die effiziente Herstellung mit hoher Formgenauigkeit, das geringe Eigengewicht und die vollständige Recyclingfähigkeit am Einsatzende. Durch den Einsatz von Spritzgusswerkzeugen wird ein ausgezeichneter Detaillierungsgrad und eine hohe Formtreue an den Formteilkonturen erzielt. Die Besonderheit dieses Verfahrens sind die feine Oberflächenstruktur und die erhöhte Festigkeit des Formteils.

Gemäß einer zweiten vorteilhaften Ausführungsform des erfindungsgemäßen Verfahrens wird vorgeschlagen, dass als Verarbeitungsmaschine eine Heißpresse verwendet und damit das Ausgangsmaterial durch Heißpressen verarbeitet wird. Vorteilhafterweise kann dabei vorgesehen sein, dass das Heißpressen bei einer Temperatur zwischen 90 °C und 200 °C, bevorzugt bei einer Temperatur zwischen 110 °C und 150 °C erfolgt.

Diese Verarbeitung des Ausgangsmaterials erfolgt auf derselben Basis des Ausgangsmaterials und dessen Vorbereitung wie beim Spritzgießen. Eine zu hohe Temperatur bewirkt auch hier ein Verbrennen des Ausgangsmaterials während des Pressens und eine zu niedrige Temperatur ergibt ein nicht bearbeitbares, nicht ausreichend flüssiges Ausgangsmaterial. Die Temperatur im Prozess sollte vorzugsweise 200 °C nicht überschreiten, da sonst das Ausgangsmaterial verbrennt. Eine Temperatur von unter 90 °C sollte nicht unterschritten werden, da sonst keine Verbindung des Ausgangsmaterials erfolgt. Die Fließfähigkeit des Ausgangsmaterials kann durch die Bestandteile und deren Anteile eingestellt werden. Der Pressdruck und die Pressdauer können auf die Form abgestimmt werden, um eine optimale Verformung und Festigkeit zu erreichen.

Gemäß einer dritten vorteilhaften Ausführungsform des erfindungsgemäßen Verfahrens wird vorgeschlagen, dass als Verarbeitungsmaschine ein Extruder verwendet und damit das Ausgangsmaterial durch Extrudieren verarbeitet wird. Vorteilhafterweise kann dabei vorgesehen sein, dass das Extrudieren bei einer Temperatur zwischen 90 °C und 240 °C, bevorzugt bei einer Temperatur zwischen 110 °C und 210 °C erfolgt.

Die Verarbeitungstemperatur kann an die Viskosität des Ausgangsmaterials angepasst werden, um die für die Verarbeitung richtige Konsistenz einzustellen. Eine zu hohe Temperatur bewirkt ein Verbrennen des Ausgangsmaterials während des Plastifizierens und eine zu niedrige Temperatur ergibt ein nicht bearbeitbares, nicht ausreichend flüssiges Ausgangsmaterial. Die Temperatur im Prozess sollte vorzugsweise 240 °C nicht überschreiten, da sonst das Ausgangsmaterial verbrennt. Eine Temperatur von unter 90 °C sollte nicht unterschritten werden, da sonst keine Verbindung des Ausgangsmaterials erfolgt.

Die Temperatur in der Schnecke und dem Austritt können aufeinander abgestimmt werden. Die Fließeigenschaft des Ausgangsmaterials wird durch das Mischungsverhältnis des ersten und zweiten Grundmaterials eingestellt. Je nach Rezeptur, Anwendung, Materialmenge, Materialstärke und Maschinengeschwindigkeit können die Temperaturzonen der Verarbeitungsmaschine unterschiedlich zu gestaltet werden.

Die nach dem erfindungsgemäßen Verfahren hergestellten Formteile, insbesondere rezyklierbare Formteile aus biologisch abbaubaren Rohstoffen, sind dreidimensionale Gegenstände, insbesondere solche, die für eine einmalige Verwendung oder eine kurze Einsatzdauer vorgesehen sind. Die möglichen Einsatzgebiete der Erfindung beschränken sich nicht nur auf Einwegartikel, die nach dem Gebrauch entsorgt werden. Vielmehr ergibt sich durch unterschiedlich einstellbare Materialeigenschaften ein breites Spektrum an möglichen Anwendungen für die erfindungsgemäß hergestellten Formteile, die beispielsweise mittels Papierspritzguss hergestellt werden können. So kommen auch zahlreiche andere Gebrauchsgegenstände, Produkte und Bauteile, die insbesondere nicht ständiger Witterung ausgesetzt sind, für eine Herstellung mit einem erfindungsgemäßen Verfahren in Frage. Hierzu zählen beispielsweise Gebrauchsgegenstände wie Haushaltswaren, z. B. Besteckteile und Behälter, Pflanzentöpfe, Büroartikel, Schreibgeräte, Verpackungsmaterial, das in seiner Formgebung an ein zu verpackendes Produkt angepasst ist (beispielsweise von technischen Geräten wie Mobilgeräten, Laptops, Tabletts oder Kopfhörern), thermische Isolationskörper, Verkleidungen, Spielzeug und Gehäuse für Elektrogeräte.

Die biologische Abbaubarkeit eines nach dem erfindungsgemäßen Verfahren hergestellten Formteils bedeutet, dass es auch im Hauskompost abbaubar ist. Das trifft für viele Biokunststoffe nicht zu, die zwar grundsätzlich kompostierbar sind, dies aber nicht über den Hauskompost erfolgen kann, sondern nur bei höheren Temperaturen.

Ein vorteilhaftes Merkmal eines nach dem erfindungsgemäßen Verfahren hergestellten Formteiles kann sein, dass es rezyklierbar ist. Unter der Rezyklierbarkeit eines Materials oder Produktes versteht man gemeinhin, dass es aus einem Material besteht, das wiederverwertet werden kann, im vorliegenden Fall für den Wiedereinsatz bzw. das Recycling in der Papierherstellung geeignet ist.

Unter Rezyklierbarkeit im Sinne der Erfindung ist die Eigenschaft eines gebrauchten oder gebrauchsfähigen Produktes aus Papier, Karton oder Pappe zu verstehen, in einer den anerkannten Regeln der Technik entsprechenden Altpapieraufbereitungsanlage so aufbereitbar zu sein, dass der erzeugte Altpapierstoff die störungsfreie und kosteneffiziente Herstellung eines qualitativ akzeptablen, altpapierhaltigen Neupapiers erlaubt. Die Rezyklierbarkeit kann insbesondere nach der Prüfmethode PTS-RH 021:2012 beurteilt werden. Sie dient zur Charakterisierung der Rezyklierbarkeit von Produkten aus Papier, Karton und Pappe, wie Packmitteln, Spezialprodukten und grafischen Druckerzeugnissen und beruht auf den Kriterien der Zerfaserbarkeit (Massenanteil der nicht zur Papierherstellung nutzbaren Bestandteile) und der störungsfreien Blattbildung (Sauberkeit des zur Papierherstellung nutzbaren Massenanteils bzgl. klebender Verunreinigungen und optischer Inhomogenitäten), sowie in manchen Fällen der Deinkbarkeit (Entfernbarkeit von Druckfarbenbestandteilen) .

Ein nach dem erfindungsgemäßen Verfahren hergestelltes Formteil erfüllt vorzugsweise die Voraussetzungen der Rezyklierbarkeit nach dieser Prüfmethode. Das gilt auch, wenn das Formteil, nachdem es durch eine thermoplastische Verarbeitungsmaschine hergestellt wurde, eine optionale Veredelung erhält, beispielweise eine Beschichtung mit einem (Kunststoff)Lack oder einem Pulver zur farbigen Kennzeichnung oder zur Oberflächenvergütung, mit Aluminium zum Erzeugen einer metallischen Oberfläche (beispielsweise für Dämmplatten) oder mit einem Salz für den Brandschutz. Bei einem nach dem erfindungsgemäßen Verfahren hergestellten Formteil kann die Beschichtung abtrennbar sein, sodass es trotz der Beschichtung nach deren Entfernen rezyklierbar ist, und es weist gegenüber einem alternativ nach dem Stand der Technik hergestellten Formteil, das zu einem hohen Anteil oder vollständig aus Kunststoff besteht, die Vorteile auf, dass seine Herstellung viel preiswerter und umweltschonender ist.

Weitere Vorteile und Merkmale der Erfindung ergeben sich aus den Ansprüchen und der nachfolgenden Beschreibung, in der Ausführungsbeispiele der Erfindung unter Bezugnahme auf die Zeichnung im Einzelnen erläutert sind. Die darin beschriebenen Besonderheiten können einzeln oder in Kombination miteinander eingesetzt werden, um bevorzugte Ausgestaltungen der Erfindung zu schaffen. Gleiche oder gleich wirkende Teile werden in den Figuren mit denselben Bezugszeichen bezeichnet und gewöhnlich nur einmal beschrieben, auch wenn sie bei anderen Ausführungsformen vorteilhaft eingesetzt werden können.

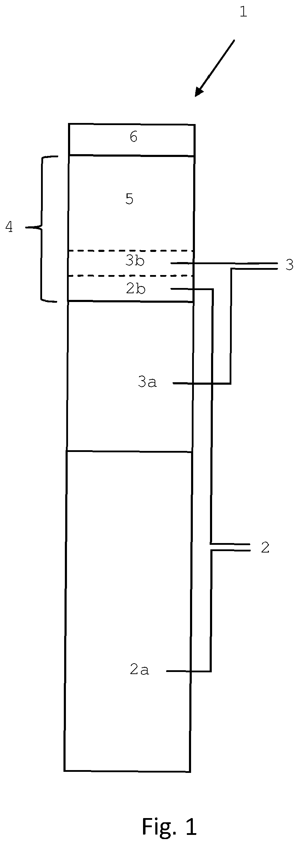

Die Fig. 1 veranschaulicht die grundsätzliche Zusammensetzung eines erfindungsgemäßen Ausgangsmaterials 1. Es umfasst als erstes Grundmaterial 2 ein Fasermaterial, das einen Feststoffanteil 2a und einen Feuchteanteil 2b aufweist. Ferner umfasst das Ausgangsmaterial 1 als ein zweites Grundmaterial 3 ein strukturgebendes Fließhilfsmittel, das einen Feststoffanteil 3a und einen Feuchteanteil 3b aufweist. Das Ausgangsmaterial 1 enthält Feuchte 4, die sich aus dem Feuchteanteil 2b des ersten Grundmaterials 2 (des Fasermaterials), dem Feuchteanteil 3b des zweiten Grundmaterials 3 (des strukturgebenden Fließhilfsmittels) und optional zugesetzter Feuchte 5 zusammensetzt. Ferner enthält das Ausgangsmaterial 1 optional ein Additiv 6.

Das Ausgangsmaterial 1 besteht zu mindestens 51 % aus dem Feststoffanteil 2a des ersten Grundmaterials 2 (des Fasermaterials) und zu mindestens 15 % aus dem Feststoffanteil 3a des zweiten Grundmaterials 3 (des strukturgebenden Fließhilfsmittels). In vorteilhaften Ausführungsformen beträgt der Feststoffanteil 2a des ersten Grundmaterials 2 an dem Ausgangsmaterial 1 maximal 85 % und der Feststoffanteil 3a des zweiten Grundmaterials 3 an dem Ausgangsmaterial 1 maximal 49 %. Der Anteil der Feuchte 4 in dem Ausgangsmaterial 1 beträgt zwischen 5 % und 20 %, wobei die während des Herstellungsverfahrens zugesetzte, d. h. nicht in dem ersten Grundmaterial 2 und zweiten Grundmaterial 3 enthaltene Feuchte 5 weniger als 12 % des Ausgangsmaterials 1 beträgt und in bevorzugten Ausführungsformen entfällt.

Ein konkretes Anwendungsbeispiel eines solchen Ausgangsmaterials 1, das bereitgestellt und mittels einer thermoplastischen Verarbeitungsmaschine zu einem Formteil verarbeitet wird, insbesondere durch Spritzgießen, Heißpressen oder Extrudieren, wobei das Ausgangsmaterial 1 mindestens zu 51 % ein Fasermaterial 2 und mindestens zu 15 % ein strukturgebendes Fließhilfsmittel 3 umfasst, der Feuchteanteil 4 des Ausgangsmaterials 1 zwischen 5 % und 20 % beträgt, das Ausgangsmaterial 1 weniger als 12 % während des Verfahrens zugesetzte Feuchte 5 umfasst, das Ausgangsmaterial 1 homogenisiert wird und seine Verarbeitung in der Verarbeitungsmaschine bei einer Temperatur zwischen 90 °C und 240 °C erfolgt, besteht aus 55 % Recyclingfasern als erstem Grundmaterial und 35 % Stärke sowie 10 % langkettigem Zucker als zweitem Grundmaterial und einer während des Herstellungsverfahrens zugesetzten Feuchte von 0 %.

Dieses beispielhafte Ausgangsmaterial wird im Rahmen einer Ausgestaltung des erfindungsgemäßen Verfahrens bereitgestellt, homogenisiert und mit einer gebräuchlichen Spritzgussmaschine als thermoplastische Verarbeitungsmaschine verarbeitet, etwa bei einem Düsendurchmesser von ca. 5 mm, einem Einspritzdruck von ca. 20 bar und einer Temperatur von ca. 120 °C. Auf diese Weise kann beispielsweise eine Schale für die Aufbewahrung von Lebensmitteln als erfindungsgemäßes Formteil hergestellt werden, z. B. eine Mitnahme-Verpackung. Nach dem Spritzgießen wird die Schale aus hygienischen Gründen zumindest in den Bereichen, in denen sie mit eingefüllten Lebensmitteln in Kontakt kommt, mit einer von der Schale abtrennbaren Barriereschicht versehen. Die Schale kann trotz der Barriereschicht unproblematisch im Altpapier entsorgt und rezykliert werden.

### Bezugszeichenliste

- 1: Ausgangsmaterial
- 2: Erstes Grundmaterial (Fasermaterial)
- 2a: Feststoffanteil erstes Grundmaterial
- 2b: Feuchteanteil erstes Grundmaterial
- 3: Zweites Grundmaterial (strukturgeb. Fließhilfsmittel)
- 3a: Feststoffanteil zweites Grundmaterial
- 3b: Feuchteanteil zweites Grundmaterial
- 4: Feuchte
- 5: zugesetzte Feuchte
- 6: Additiv

## Patentansprüche

1. Verfahren zum Herstellen eines Formteils, insbesondere aus einem Recycling-, Cellulose-, Biofaser- oder Biopulver-Material, bei dem ein Ausgangsmaterial (1) bereitgestellt und mittels einer thermoplastischen Verarbeitungsmaschine zu dem Formteil verarbeitet wird, **dadurch gekennzeichnet, dass**
das Ausgangsmaterial (1) ein erstes und ein zweites Grundmaterial umfasst, wobei
als erstes Grundmaterial (2) ein Fasermaterial und als zweites Grundmaterial (3) ein strukturgebendes Fließhilfsmittel verwendet wird,
der Feststoffanteil (2a) des Fasermaterials mindestens 51 % des Ausgangsmaterials (1) bildet,
der Feststoffanteil (3a) des strukturgebenden Fließhilfsmittels mindestens 15 % des Ausgangsmaterials (1) bildet,
der Feuchteanteil (4) des Ausgangsmaterials (1) zwischen 5 % und 20 % beträgt,
das Ausgangsmaterial (1) weniger als 12 % während des Verfahrens zugesetzte Feuchte (5) umfasst,
das Ausgangsmaterial (1) homogenisiert wird und
die Verarbeitung des homogenisierten Ausgangsmaterials (1) in der Verarbeitungsmaschine bei einer Temperatur zwischen 90 °C und 240 °C erfolgt.

2. Verfahren nach Anspruch 1, **dadurch gekennzeichnet, dass** das erste Grundmaterial (2) ein Fasermaterial aus Biofasern und/oder mindestens ein Mitglied der folgenden Gruppe umfasst: Pappe, Papier, Papierfasern, Recyclingpapier, Cellulose, Kleie, Stroh, Hanf, Baumwolle.

3. Verfahren nach einem der vorhergehenden Ansprüche, **dadurch gekennzeichnet, dass** der Feststoffanteil (2a) des ersten Grundmaterials 51 % bis 85 %, vorzugsweise 51 % bis 80 % und besonders bevorzugt 51 % bis 70 % des Ausgangsmaterials (1) bildet.

4. Verfahren nach einem der vorhergehenden Ansprüche, **dadurch gekennzeichnet, dass** das zweite Grundmaterial (3) mindestens ein Mitglied aus der folgenden Gruppe aufweist oder aus diesem besteht: Native Stärke, modifizierte Stärke, Industriestärke, Mehl, Müllereiprodukte, Kartoffelstärke, Weizenstärke, lang- oder kurzkettiger Zucker; und/oder dass das zweite Grundmaterial (3) aus mindestens einem Mitglied aus der folgenden Gruppe hergestellt ist: Weizen, Mais, Tapioka, Reis, Kartoffeln, chemisch, mechanisch und/oder thermisch modifizierter Stärketyp.

5. Verfahren nach einem der vorhergehenden Ansprüche, **dadurch gekennzeichnet, dass** der Feststoffanteil (3a) des zweiten Grundmaterials 15 % bis 49 %, bevorzugt 20 % bis 49 % und besonders bevorzugt 25 % bis 49 % des Ausgangsmaterials (1) bildet.

6. Verfahren nach einem der vorhergehenden Ansprüche, **dadurch gekennzeichnet, dass** das Ausgangsmaterial (1) weniger als 8 %, vorzugsweise weniger als 4 %, während des Verfahrens zugesetzte Feuchte (5) umfasst, und/oder dass vorgesehen ist, dass dem Ausgangsmaterial (1) keine Feuchte (5), insbesondere kein Wasser und/oder kein Alkohol, zugesetzt wird.

7. Verfahren nach einem der vorhergehenden Ansprüche,
**dadurch gekennzeichnet, dass** der Feuchteanteil (4) des Ausgangsmaterials (1) zwischen 5 % und 8 % beträgt.

8. Verfahren nach einem der vorhergehenden Ansprüche,
**dadurch gekennzeichnet, dass** das Ausgangsmaterial (1) zum Erzielen einer speziellen Eigenschaft des Formteils ein Additiv (6) umfasst, das mindestens ein Mitglied der folgenden Gruppe aufweist: Farbstoff, Farbe, Aktivkohle, elektrisch leitende Partikel, verkapselte Mittel, Rostschutzmittel, Öl; wobei insbesondere vorgesehen ist, dass das Additiv (6) 0 % bis 5 %, vorzugsweise 0,1 % bis 4 %, des Ausgangsmaterials (1) bildet.

9. Verfahren nach einem der vorhergehenden Ansprüche,
**dadurch gekennzeichnet, dass** das Ausgangsmaterial (1) frei von Kunststoff ist.

10. Verfahren nach einem der vorhergehenden Ansprüche,
**dadurch gekennzeichnet, dass** als Verarbeitungsmaschine eine Verarbeitungsmaschine für den Spritzguss verwendet und damit das Ausgangsmaterial (1) durch Spritzgießen verarbeitet wird, wobei insbesondere vorgesehen ist, dass das Spritzgießen bei einer Temperatur zwischen 90 °C und 200 °C, bevorzugt bei einer Temperatur zwischen 110 °C und 150 °C erfolgt.

11. Verfahren nach einem der Ansprüche 1 bis 9, **dadurch gekennzeichnet, dass** als Verarbeitungsmaschine eine Heißpresse verwendet und damit das Ausgangsmaterial (1) durch Heißpressen verarbeitet wird, wobei insbesondere vorgesehen ist, dass das Heißpressen bei einer Temperatur zwischen 90 °C und 200 °C, bevorzugt bei einer Temperatur zwischen 110 °C und 150 °C erfolgt.

12. Verfahren nach einem der Ansprüche 1 bis 9, **dadurch gekennzeichnet, dass** als Verarbeitungsmaschine ein Extruder verwendet und damit das Ausgangsmaterial (1) durch Extrudieren verarbeitet wird, wobei insbesondere vorgesehen ist, dass das Extrudieren bei einer Temperatur zwischen 90 °C und 240 °C, bevorzugt bei einer Temperatur zwischen 110 °C und 210 °C erfolgt.

13. Formteil, hergestellt nach einem Verfahren gemäß einem der vorhergehenden Ansprüche, wobei insbesondere vorgesehen ist, dass es rezyklierbar ist.
